## Europäisches Patentamt
## European Patent Office
## Office européen des brevets

(19)

(11) Publication number: **0 185 424**
**A1**

(12) # EUROPEAN PATENT APPLICATION

(21) Application number: **85202022.1**

(22) Date of filing: **04.12.85**

(51) Int. Cl.⁴: **B 07 C 5/36**
**B 07 C 5/22**

(30) Priority: **13.12.84 NL 8403790**
**28.03.85 NL 8500922**

(43) Date of publication of application:
**25.06.86 Bulletin 86/26**

(84) Designated Contracting States:
**AT BE CH DE FR GB IT LI LU N'. SE**

(71) Applicant: **De Greef's Wagen- Carrosserie- en Machinebouw B.V.**
**No. 62, Nieuwsteeg**
**NL-4196 AM Tricht(NL)**

(72) Inventor: **de Greef, Jan Antoon**
**No. 2, De Hoekenburg**
**NL-4196 AD Tricht(NL)**

(74) Representative: **Konings, Lucien Marie Cornelis Joseph et al,**
**OCTROOIBUREAU ARNOLD & SIEDSMA Sweelinckplein 1**
**NL-2517 GK Den Haag(NL)**

(54) **Device for sorting products.**

(57) In a device for sorting fruit, an endless series of mutually connected holders (3) for separately conveying fruit is provided with flexible strips (7) moving with said holders and guiding the fruit delivered by said holders into discharge stations. The strips are not permanently kept against the bottom sides of following holders, but are permitted to engage top sides of following holders, strip transfer means (120) being provided for displacing each flexible strip associated with a holder from the carrying side of a following holder to the bottom side of this following holder.

FIG.19

-1-

## Device for sorting products

The invention relates to a device as described in the preamble of claim 1.

Such a device is known from the European patent application No. 81.200310.1. This device ensures that the flexible strips remain continually on the underside of the following holders. To this end, there are at the reversing end of the flexible member where the flexible member changes from a forward moving to a backward moving part i.e. at the place where the holders are tilted from a turned over position, guide means available to then hold the flexible strips on the upper side of the holders which are moving upside down. Guide means are further available over the backward moving part of the flexible member to hold these flexible strips there on the bottom side of the holders lying upside down. The guide means for controlling the flexible strips are bulky. The known device has moreover another additional plate covering the backward moving part to prevent the horizontal flexible strips being soiled by dirt falling from the forward moving part.

The invention has for its object to provide a simpler device of the type referred to in the preamble.

The device is characterized by strip transfer means for displacing each flexible strip associated with a holder from the carrying side of a following holder to the bottom side of this following holder.

Preferred embodiments are described in the claims that follow.

The characteristics and advantages of the invention will be explained in the hereafter following description, with reference to drawings.

Fig. 1 is a partial longitudinal section of a device according to the invention,

Fig. 2 is a cross section along the line II-II of the device in fig. 1,

Fig. 3 is a detail side view on a larger scale of a weighing mechanism according to the invention,

Fig. 4 is a front view of the weighing mechanism in fig. 3,

Fig. 5 is a perspective view of a part of the weighing mechanism in fig. 3,

Fig. 6 is detail VI from fig. 1 on a larger scale, which shows in a number of positions the manner in which a fruit is guided by a strip,

Fig. 7 is a perspective partial view on a larger scale of detail VII from fig. 1,

Fig. 8 shows on a larger scale a perspective view of detail VIII from fig. 1,

Figs. 9 and 10 each show a longitudinal section of alternative embodiments of detail VIII,

Fig. 11 gives details on a large scale of the anchor ends of a flexible member of the device, again from fig. 1,

Figs. 12-15 show variants of detail XII from fig. 11,

Fig. 16 is a perspective view of the device in fig.1,

Fig. 17 and 19 each show a schematic side view of, in each case, a still further developed device according to the invention, and

Fig. 18 shows detail XVIII from fig. 17 on a large scale with holders in various positions.

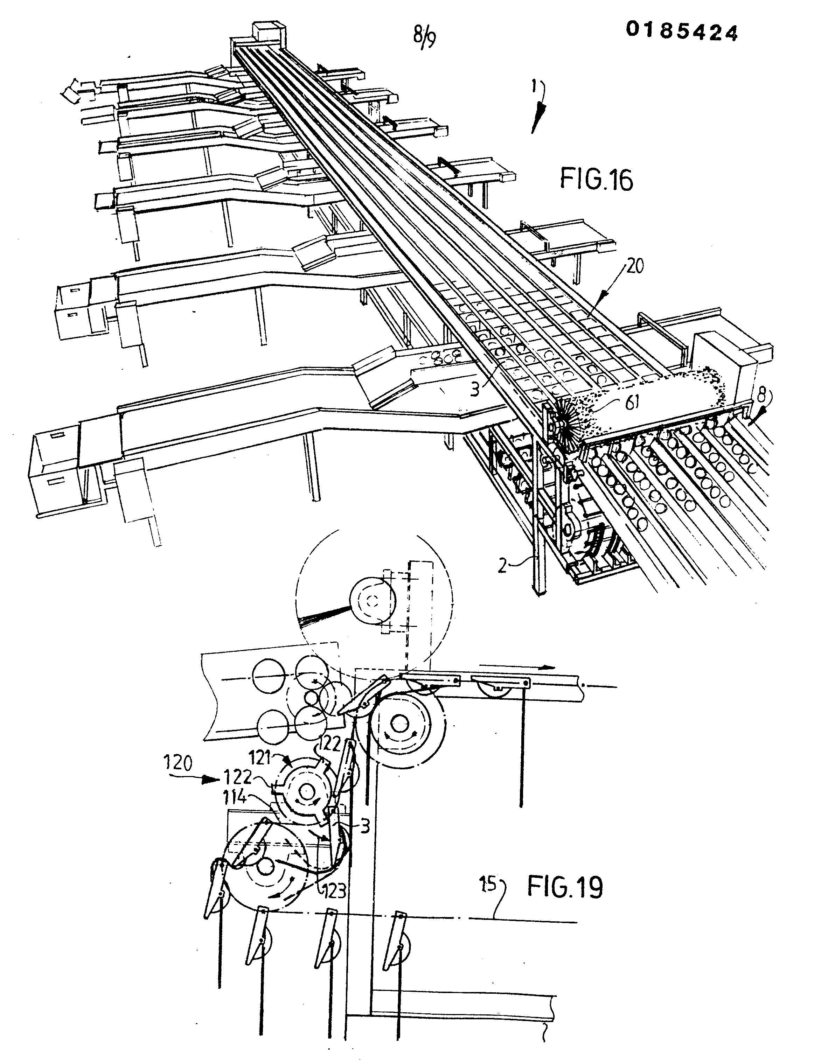

The device 1 for sorting products, such as fruit 4, comprises a frame 2 in which at the rear end two guide wheels 6 are mounted for rotation on a common shaft 22. At the front end two smaller chain wheels 45 are mounted for rotation on a shaft 23. Above chain wheels 45 is further located a set of guide wheels 47 rotable on a shaft 48 which is situated at a distance $a$ inwards relative to shaft 23. In fig. 16 can be seen that device 1 comprises six adjacent rows of holders 3. In each case six holders 3 are arranged on one and the same shaft 16 between two chains 15. Holders 3 are arranged connecting to one another, so that together with chain 15 they form a flexible member 20 similar to a conveyor belt. On the upper side between the guide wheels 47, 6 extends a horizontal section 5 of this flexible member 20. This is the forward moving part.

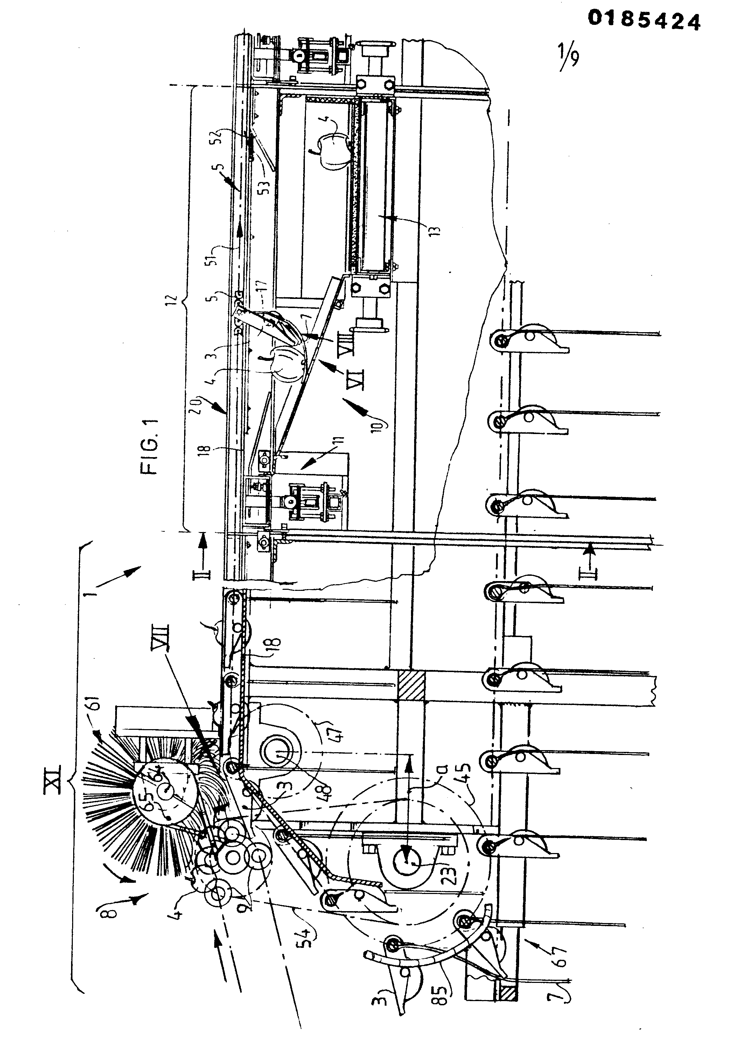

Products 4 are put into holders 3 in a feeding station 8, such that in each case a product 4 is laid carefully by a feeding device 9 into each holder 3. Products 4 placed into holders 3 in feeding station 8 are conveyed over the horizontal section 5 in the direction of arrow 51, because flexible member 20 is driven by a drive 82 via guide means 6. During this movement products 4 are discharged according to the value of a determined product parameter into a determined discharge station 10 of horizontal section 5. One discharge station 10 is shown in fig. 1. There must be at least as many discharge stations 10 available in a sorting device 1 as there are product classes into which products 4 have to be sorted. In order to be able to make it possible to alter the number of discharge stations 10 each discharge station 10 is preferably accomodated in a discharge unit 12, the desired number of which is incorporated in a sorting device 1. In each discharge station 10 a holder 3 can be moved by control means 11 from a conveying position to an unloading position, whereby the product concerned 4 is discharged in that discharge station 10. In the device 1 in fig. 1, weight is the product parameter which determines into which product class the product concerned 4 falls. Control means 11 therefore comprise a weighing mechanism 24.

In discharge station 10 is located a belt conveyor 13 which can transport the product 4 delivered by holders 3 to, for example, an unshown packaging device.

Each chain 15 is supported in horizontal section 5 by a chain guide track 14. Each holder 3, which as can be seen is scoop-shaped, can pivot around the shaft 16. In the conveying position holder 3 must remain horizontal. To this end each holder 3 is provided with a pin 17 which slides over a holder guide track 18 during forward movement of the chains 15.

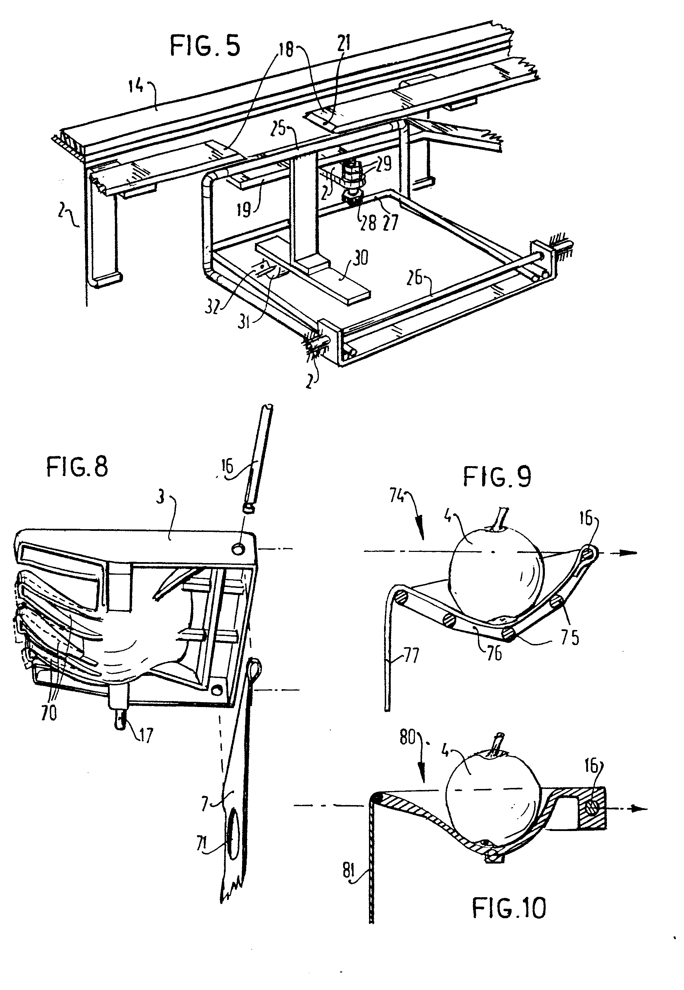

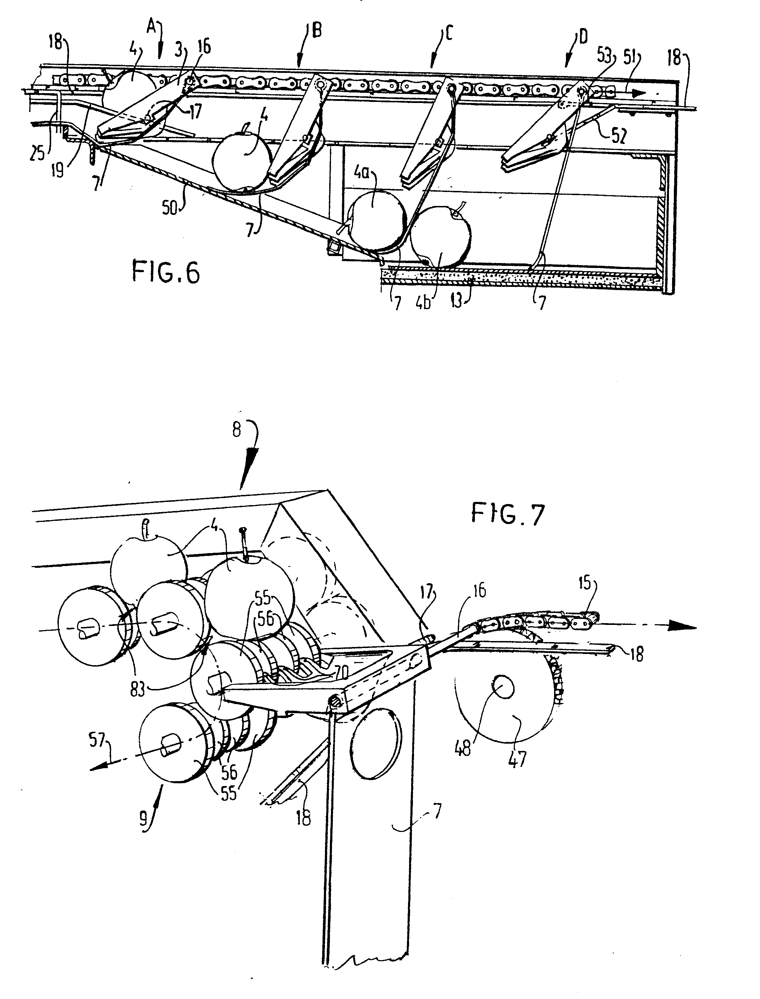

As is shown in fig. 5, holder guide track 15 is interrupted at the beginning of a discharge station 10 at the point of control means 11. Here the pin 17 of holder 3 does not therefore slide over holder guide track 18, but instead over a supporting bracket 25 of a weighing mechanism 24. Supporting bracket 25 pivots round the axis of a shaft 26 mounted for rotation in frame 2. Connected to supporting bracket 25 is a stop bracket 27 which is pressed against the head of a bolt 28. Bolt 28 is connected to frame 2 and locked in a determined set position by means of nuts 29. This position is such that the top side of supporting brackets 25 lies in the same plane as holder guide track 18, so that the pin 17 of holder 3 comes away from holder guide track 18 to rest evenly on supporting bracket 25, and can if necessary move back again from supporting bracket 25 onto holder guide track 18. Connected with supporting bracket 25 is a pressure plate 30, against the under side of which a roller 31 presses. The roller 31 is accomodated for rotation in an arm 32 which can itself pivot round a shaft 34 in a frame 34. A draw spring 33 engages the arm 32 at the other end relative to shaft 35. The other end of draw spring 33 is coupled to a screwed rod 36, which supports via an adjusting nut 37 against a support 38 pivotally coupled with frame 34. By turning adjusting nut 37, the extend of tensioning of draw spring 33 and thereby the force applied to arm 32 can be adjusted. Frame 34 is mounted on a bush 41 at a determined height by means of threaded ends 39 and nuts 40, this bush 41 being arranged so as to be movable on a square tube 43.

The position of bush 41 relative to tube 43 can be locked by means of a securing bolt 42.

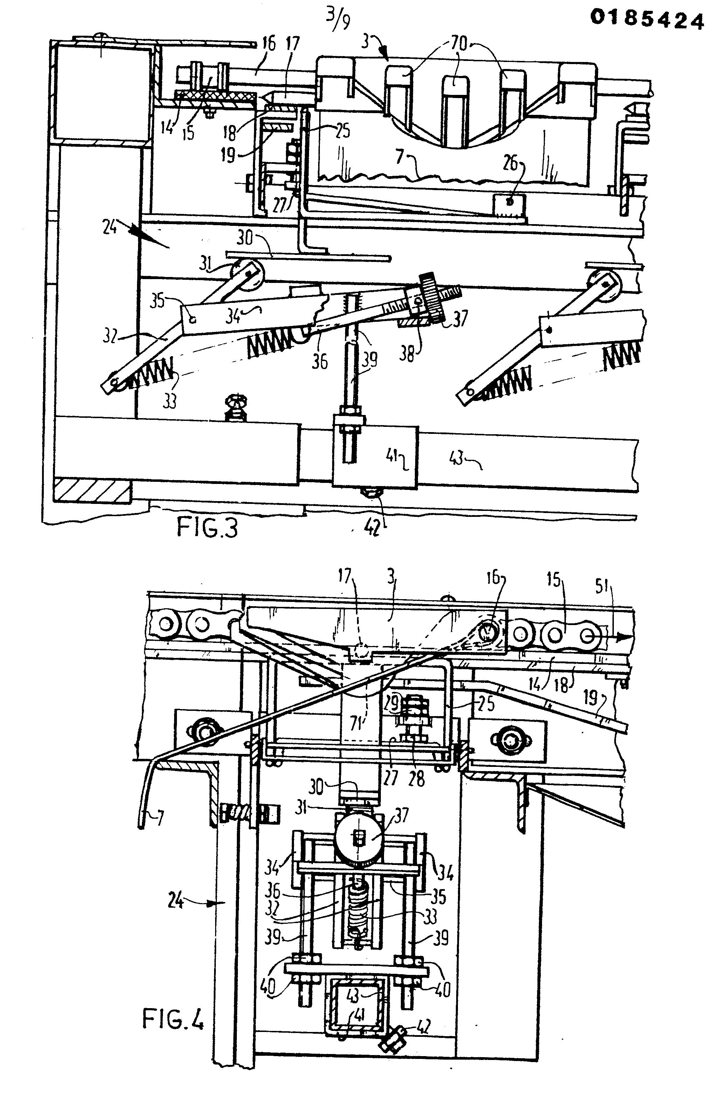

By displacing bush 41 with frame 34 to the right in fig. 3, the point of contact of roller 31 with pressure plate 30 also shifts to the right. While the force applied by roller 31 on pressure plate 30 remains the same, the force necessary to press supporting bracket 25 downwards becomes in this way smaller, because the ration between the distance of the point of contact of roller 31 with pressure plate 30 and shaft 26 on the one hand and the distance between the top side 8 supporting bracket 25 and shaft 27 on the other becomes smaller. If, as a result of the weight of holder 3 and the therein accomodated product 4, the force applied by pin 17 on supporting bracket 25 is greater than the force resulting from the load on spring, pin 17 will press supporting bracket 25 downwards, whereby pin 17 comes into contact with the discharge track 19 (see figs. 4 and 5). With further movement holder 3 reaches the discharge position. Holder guide track 18 is provided at the end of the interruption with a knife edge 21 to prevent jamming of pin 17.

The dimensioning of weighing mechanism 24 is such in this embodiment that the force applied by roller 31 on pressure plate 30 becomes smaller as pressure plate 30 is moved downwards. This is the case because the movement around shaft 35 created here by draw spring 33 becomes smaller because the decrease in movement resulting from the moment arm becoming smaller is greater than the increase resulting from the tensioning of draw spring 33. This has the great advantage that, when the force applied by pin 17 on supporting bracket 25 lies only slightly above the set value, bracket 25 still moves rapidly downwards, so that the device 1 can operate at high speed.

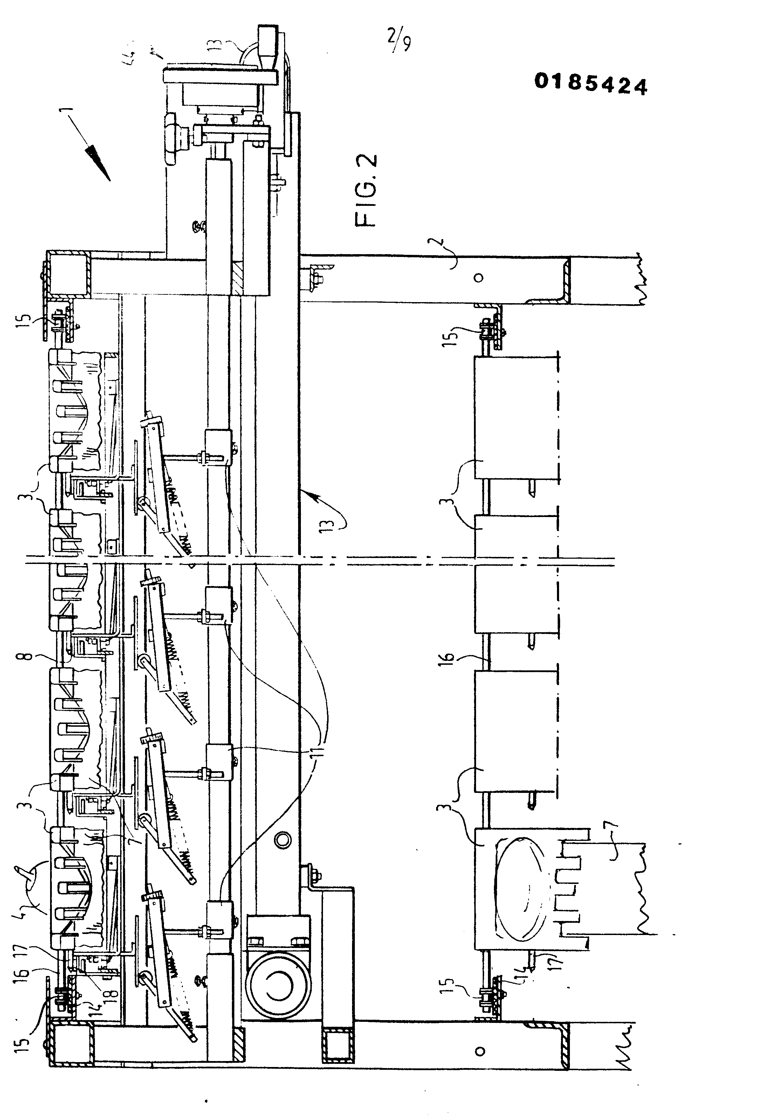

All the weighing mechanisms 24 associated with one and the same discharge station 10 are adjusted simultaneously to a desired value. This is achieved by securing the bush 41 of each weighing mechanism 24 onto a shared square tube 43 using locking bult 42. With all weighing mechanisms 24 this square tube 43 can be moved to the right and the left in fig. 2. By once setting the position of bushes 41 on square tubes 43 and adjusting draw springs 33 by means of adjusting nut 37, the minimum weight of the product class associated with discharge station 10 can be further adjusted for all four weighing mechanisms 24 by moving square tube 43 in longitudinal direction by means of an adjusting unit 44. Square tube 43 forms together with adjusting unit 44 the shared adjusting means.

Instead of the solely mechanical control means for regulating holders 5 described above, use can, if desired, be made of control means provided w.th electronic control. A flexible strip 7 co-operates with each holder 3 to guide a product delivered by holder 3 into a discharge station 10. Strip 7 a flexible, slack piece of plastic foil or, for example, rubberized cloth. As can be seen in amongst others fig. 6, a strip 7 is arranged in the embodiment shown under each holder 3 with a loop around shaft 16. When now the force applied by pin 17 on supporting bracket 25 is, as a result of the weight of product 4, greater than the set value, pen 17 presses bracket 25 downwards and comes to rest on discharge track 18. As chain 15 is moved further to the right as according to arrow 51, holder 3 then tilts from the horizontal conveying position via the position at A into the discharging position at B. As a result product 4 rolls out of holder 3 onto strip 7. Preferably in every discharge station 10 there is a slideway 50 fitted which extends inclining downwards in the direction of movement of the holders 3 and which co-operates with strips 7. When however strips 7 are used which are longer than the strips 7 in fig. 6, such a slideway 50 is not strictly necessary. The careful manner in which strips 7 guide a product 4 along slideway 50 to the conveyor belt on which product 4 is carried away is clearly apparent from fig. 6. Strip 7 also prevents a hard colision between product 4a and product 4b. Product 4b is pushed away carefully by strip 7 and product 4a is brought gently against product 4b. After unloading of product 4, pen 17 comes onto a rising portion 52 of discharge track 19 which again guides pen 17 to the holder guide track 18, so that holder 3 returns to the horizontal position. To this end there is accomodated in holder guide track 18 above rising portion 52 a resilient or upward pivoting guide track piece 53 which can pass a pin 17 from beneath.

The feed station 8 (see fig. 7) preferably comprises a disc conveyor 9 as feeding device. Disc conveyor 9 comprises a series of, in this embodiment, four associated discs 55 for each series of holders 3. The outer discs 55 have in this case a greater diameter than the inner discs 56. In this way a carrying element 83 for a product 4 is formed between two successive series of four. These carrying elements 83 are moved following the path 57 in a manner already known. The movement of the disc conveyor 9 comprising carrying elements 83 is synchronised with the flexible member 20 comprising holders 3, since the disc conveyor is driven from a shaft 23 by means of chain drive 54. The synchronization of disc conveyor 9 and holders 3 is such that each time one poduct 4 is fed between two sets of four discs 55, 56, there is a holder 3 available to collect this product. By giving holder 3 a form as shown in detail in fig. 8, it can co-operate well with disc conveyor 9. For this purpose holder 3 comprises fingers 70 which can project between discs 55, 56 of disc conveyor 9. As a result product 4 has only to move over a short distance from disc conveyor 9 into holder 3 (see fig. 8).

Feed station 8 also comprises a cylindrical brush 61, the shaft 64 of which runs parallel to shaft 56 on which guide wheels 6 are mounted. Brush 61 is driven by means of a chain drive mechanism 73 having the same peripheral velocity as the forward movement velocity of holder 3. Product 4 transferred from disc transport 9 into holders 33 are directly retained in holders 3 by this brush 61, so that they are reliably held motionless therein.

As is further shown in fig. 8, the strip 7 co-operating with a holder 3 has a recess 71. The object of this recess 71 is made apparent from fig. 4.

It is self-evident that strip 7 may not influence the weighing. For this reason strip 7 is arranged around shaft 16 of holder 3. Recess 71 is now arranged in strip 7 to prevent strip 7 pressing against holder 3 on its underside during the foreward motion of holders 3, thereby influencing the measurement. From fig. 6 is also apparent that strip 7 is better able to lie against the underside of holder 3 because of the recess 71 therein.

Fig. 9 shows an alternative embodiment of a holder 74 which can be used with a strip 77. Holder 74 is in this case lattice-shaped and comprises rods 75 which are linked together by ribs 76. In this embodiment strip 77 lies on the upper side of holder 74 and product 4 already lies on strip 77 during transport. This flexible strip 77 does not however lie on the following holder 74 but beneath it, which is ensured by strip transfer means 84 hereafter described. The control means for moving holder 74 out of the conveying position into the unloading position must be arranged such that strip 77 cannot interfere with the determining of the product parameter. That is to say that when the product parameter defining the product classes is the weight of the product, strip 77 must hang freely during weighing.

Fig. 10 shows a third embodiment of a holder 80. Strip 81 is here arranged on the front face of the holder 80. Strip 81 can for example be welded onto holder 80 or form an entity with it by way of a suitable method of fabrication.

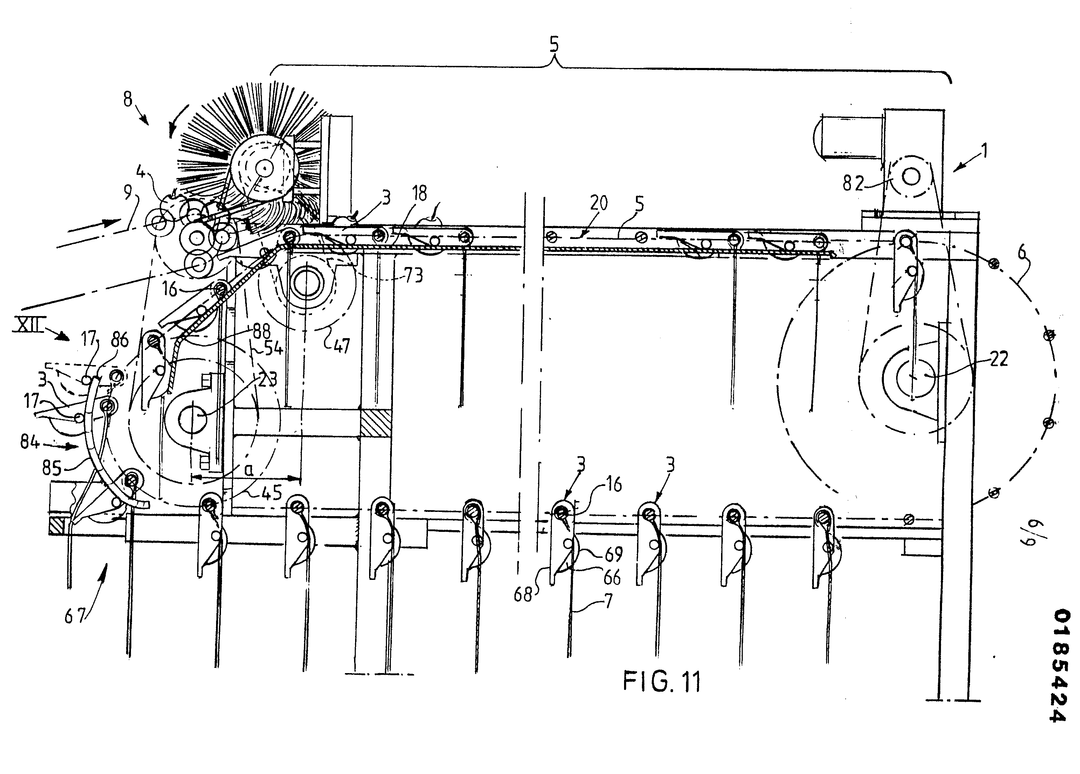

As fig. 11 shows, holders 3 hang vertically downwards in the backward moving part and flexible strips 7 each hang against the bottom 66 of the associated holder 3. As a result each strip 7 in the backward moving part of flexible member 20 is situated in front of the carrying face 68 of the following holder 3, while for a good functioning of the device 1 it is necessary that in the section 5 the strips 7 are located not above but beneath the following holder 3.

To attain this purpose device 1 comprises strip transfer means 84 for displacing a flexible strip 7 associated with each holder 3 from the carrying face 68 of a following holder 3 to the bottom side 69 of the following holder.

The strip transfer means 84 in fig. 11 comprise for each of the six rows of holders 3 a curved guide strip 85 engage the pins 17 of holders 3. The shape of each strip 85 is curved relative to the reversing path of flexible member 20 such that at the reversing end 67 the holders 3 are taken from the downward hanging position to the tilting position shown in fig. 11 by dashed lines. When pins 17 pass the end 86 of guide strips 85, they fall back to a more downward hanging position, whereby they pull the associated strips 7 with them and transfer them to the bottom side 69 of the following holders 3. Holders 3 are subsequently carried upwards, whereby pins 17 are guided in an upward inclined direction over a guide strip 88 which joint with holder guide track 18.

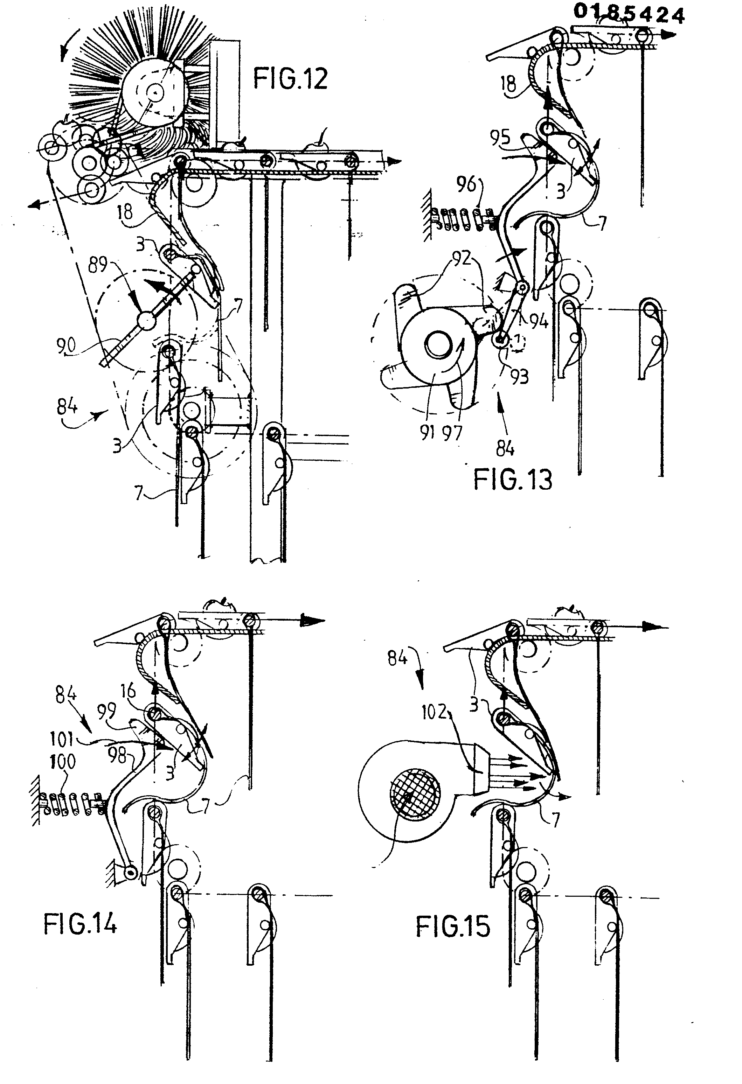

In fig. 12 the strip transfer means 84 consist of a rotor 89 rotating synchronously with the passing of holders 3 which has pushing arms 90 which push each holder 3 briefly out of the hanging position to carry the strips 7 to the bottom side of following holders 3.

The strip transfer means in fig. 13 consist of a cam disc 91 the teeth 92 of which co-operate with a roller 93 fitted at the end of a pivoting arm 94 which has a pusher 95 which has the effect of pushing the synchronously passing holders 3 briefly out of their vertical position, thereby transferring the strips 7. The pushing takes place when roller 93 falls from a tooth 92 moving as according to arrow 97 and a compression spring 96 makes the lever 94 tilt.

In fig. 14 the strip transfer means 84 comprise for each row of holders 3 a swinging pusher 98, the spoon-shaped end 99 of which is moved by the shaft 16 of the passing holder 3 counter to the action of a compression spring 100, so that after the passing of shaft 16 this swinging pusher 98, owing to the spring action of compression spring 1 , pushes away this holder in arrow direction 101, which results in the transfer of the associated strip 7. A counterweight can also be used instead of a spring.

The strip transfer means 84 in fig. 15 consist of a blow nozzle 102 which transfers the passing strips 7 when two successive holders 3 are located on either side of blow nozzle 102, at which point of time the blow air is able to blow the strip 7 then present away to the bottom side of the following holder 3.

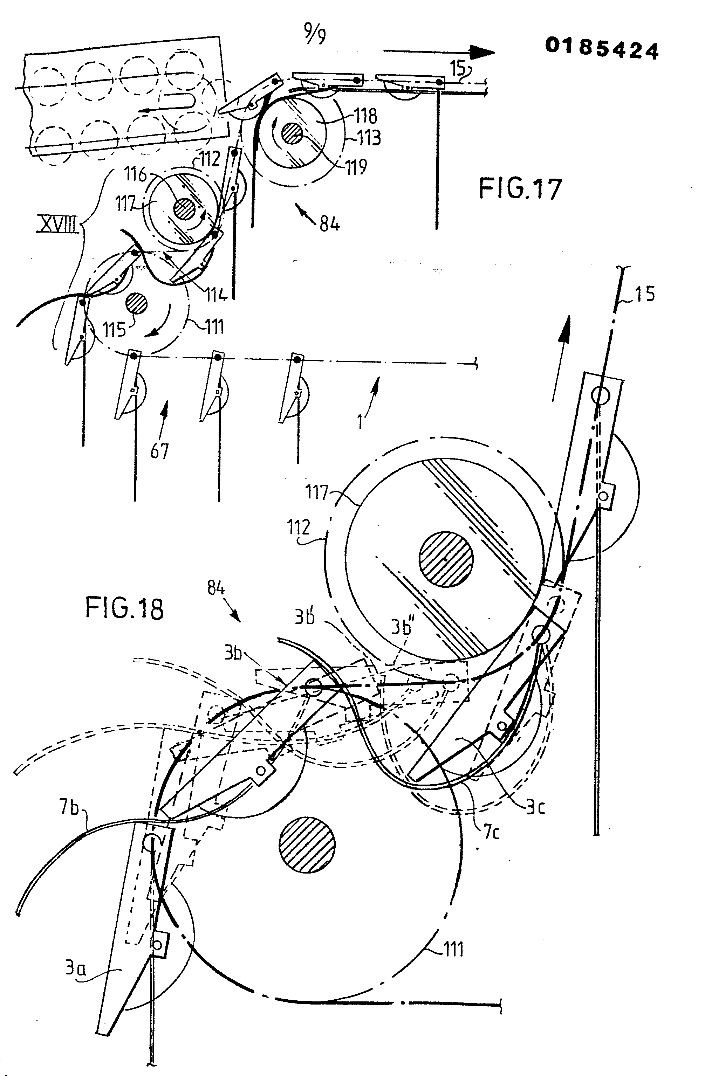

The strip transfer means 84 in fig. 17 and 18 on the reversing location 67 comprise three chain wheels 111, 112, 113 per chain 15 which guide chain 15 is an S-shaped length of track. The undermost chain wheel 111 guides chain 15 through about 180°, so that chain 15 runs to the central chain wheel 112 in a virtually horizontal direction. From this point, after being guided through about 90°, chain 15 is guided in roughly vertical direction to the uppermost chain wheel 113. Chain wheel 11 is attached to a rotating shaft 116, to which a cylinder 117 is firmly attached, while chain wheel 113 together with a cylinder 118 is firmly connected to a rotating shaft 119.

The holder 3a in fig. 18 reaches chain wheel 111 in a hanging position, whereby a strip 7b of a following holder 3b is situated on the carrying face of holder 3a. In this way holder 3b, when passing the upper face of chain wheel 111, remains virtually horizontal in the position 3b'. When passing cylinder 117 in this position, the carrying face of holder 3" strikes against the circumference of this cylinder 117, whereby this holder tilts over to the more vertical position of the holder 3c. Strip 7c is thereby transferred, as is shown in fig. 18.

The strip transfer means 120 in fig. 19 are substantially identical to the strip transfer means 84 in fig. 17, with the understanding, that cylinder 117 is replaced by a rotor 121, having three projection 122 distributed over the circumference and project ng radially, which make each holder 3 pivot in arrow direction 123 while the holders are passing through the S-shaped section of track 114.

-1-

C L A I M S

1. Device (1) for sorting products (4) such as fruit, comprising:

- a frame (2);

- at least one endless series of mutually connected holders (3) which together form a flexible member (20) and which can each pick up and deliver a separately supplied product (4);

- guide means for said member (20), connected to said frame and defining at least one horizontal section of said flexible member (20);

- a feed station (8) arranged opposite to and co-operating with said member (20) comprising a feed device for products;

- at least two discharge stations (10) for different product classes extending beneath said horizontal section;

- regulated control means which transfer holder (3) from a carrying position into an unloading position, depending on a product parameter, for example, weight determining product class, for delivering a product (4) to the discharge station (10) for the correct product class; and

- flexible strips (7) moving with said holders (3) and guiding the products (4) delivered by said holders (3) into said discharge station (10),

characterized by strip transfer means (84) for displacing a flexible strip (7) associated with a holder (3) in each case from the carrying face (68) of a following holder (3) to the bottom side of this following holder (3).

2. Device (1) as claimed in claim 1, characterized in that said strip transfer means (84) comprise in each case tilting means (85) at the reversing location (67) of said flexible member (20) for tilting said holders (3) from a downward hanging position.

3. Device (1) as claimed in claim 1, characterized in that said tilting means (85) comprise a guide (85) which engages said holder (3).

4. Device (1) as claimed in claim 1 or 2, characterized in that said strip transfer means (84) comprise at least one rotor (90, 91) coupled with said flexible member (20).

5. Device (1) as claimed in claim 1, 2 or 4, characterized in that said strip transfer means (84) comprise at least one pusher (98) which applies a push to each of said holders (3) and which is initiated by said flexible member (20).

6. Device (1) as claimed in anyone of the preceding claims, characterized in that said flexible member (20) is guided at the reversing location (67) in accordance with an S-shaped section of path.

7. Device (1) as claimed in claim 6, characterized in that, at said reversing location (67), said flexible member (20) is guided over three rotating guide wheels (111, 112, 113).

8. Device (1) as claimed in claim 6 or 7, characterized in that, at said reversing location (67), the carrying face of said holders (3) co-operates with a cylinder (117) to push said holders (3) from a horizontal position into a more downwardly direction position.

-----

FIG.1

0185424

FIG. 2

0185424

FIG.3

FIG.4

FIG.5

FIG.8

FIG.9

FIG.10

0185424

FIG.6

FIG.7

FIG. 11

6/9

0185424

7/9

0185424

FIG.12

FIG.13

FIG.14

FIG.15

661- 35.

0185424

FIG.16

20

3

61

8

2

120
121
122
114
122
3
123

15

FIG.19

661-35

9/9

0185424

FIG.17

FIG.18

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A,D | EP-A-0 037 142 (DE GREEF'S WAGEN-CARROSSERIE- EN MACHINEBOUW B.V.) <br> * Claims 1-10; figures 1-10 * <br><br> ----- | 1 | B 07 C 5/36 <br> B 07 C 5/22 |

| TECHNICAL FIELDS SEARCHED (Int. Cl 4) |
|---|
| B 07 C |

The present search report has been drawn up for all claims

| Place of search | Date of completion of the search | Examiner |
|---|---|---|
| THE HAGUE | 19-03-1986 | PESCHEL W. |